# EUROPEAN PATENT SPECIFICATION

(11) **EP 4 314 390 B1**
(45) Date of publication and mention of the grant of the patent: **02.04.2025**
(21) Application number: 22709277.2
(22) Date of filing: 14.02.2022
(51) Int. Cl.: C25B 1/042, C25B 1/23, C25B 3/26, C25B 9/75, C25B 15/08

(54) **SOEC STACK WITH FUEL FLOW FROM PERIPHERY TOWARDS CENTRE**
SOEC-STAPEL MIT BRENNSTOFFSTRÖMUNG VON DER PERIPHERIE ZUR MITTE
ASSEMBLAGE DE CELLULES D'ÉLECTROLYSE À OXYDE SOLIDE (SOEC) AVEC DÉBIT DE CARBURANT DE LA PÉRIPHÉRIE AU CENTRE

(30) Priority: 22.03.2021 EP 21163955
(43) Date of publication of application: 07.02.2024
(73) Proprietor: Topsoe A/S, 2800 Kgs. Lyngby (DK)
(72) Inventor: HEIREDAL-CLAUSEN, Thomas, 3460 Birkerød (DK); RASS-HANSEN, Jeppe, 1671 Copenhagen V (DK); BLENNOW, Bengt Peter Gustav, 3050 Humlebæk (DK); NØRBY, Tobias Holt, 2600 Glostrup (DK); KÜNGAS, Rainer, Peetri (EE)
(74) Representative: Topsoe A/S
(86) International application number: PCT/EP2022/053468
(87) International publication number: WO 2022/199935

(56) References cited:
- WO-A1-2020/171238
- CN-A- 111 118 536
- KR-B1- 100 793 931

## Description

### FIELD OF THE INVENTION

The invention relates to a Solid Oxide Electrolysis Cell (SOEC) stack, wherein the fuel flow has a direction from the periphery of the interconnect layer and cell layer towards the centre of the interconnect layer and cell layer.

### BACKGROUND OF THE INVENTION

In SOEC stacks which have an operating temperature between 600°C and 1000°C, preferably between 600°C and 850°C, several cell units are assembled to form the stack and are linked together by interconnects. Interconnects serve as a gas barrier to separate the anode and cathode sides of adjacent cell units, and at the same time they enable current conduction between the adjacent cells, i.e. between an anode of one cell and a cathode of a neighbouring cell. Further, interconnects are normally provided with a plurality of flow paths for the passage of process gas on both sides of the interconnect. To optimize the performance of a SOEC stack, a range of positive values should be maximized without unacceptable consequence on another range of related negative values which should be minimized. Some of these values are:

| VALUES TO BE MAXIMIZED | VALUES TO BE MINIMIZED |
|---|---|
| - Process gas utilization | - Cost |
| - Electrical efficiency | - Dimensions |
| - Lifetime | - Production time |
| | - Fail rate |
| | - Number of components |
| | - Material use |
| | - Parasitic loss (heating, cooling, blowers..) |

Almost all the above listed values are interrelated, which means that altering one value will impact other values. Some relations between the characteristics of process gas flow in the cells and the above values are mentioned here:

### Process gas utilization:

The flow paths on the interconnect should be designed to seek an equal amount of process gas to each cell in a stack, i.e. there should be no flow- "short-cuts" through the stack.

### Parasitic loss:

Design of the process gas flow paths in the SOEC stack and its cell units should seek to achieve a low pressure loss per flow volume, which will reduce the parasitic loss to blowers.

### Electric efficiency:

The interconnect leads current between the anode and the cathode layer of neighbouring cells. Hence, to reduce internal resistance, the electrically conducting contact points (hereafter merely called "contact points") of the interconnect should be designed to establish good electrical contact to the electrodes (anode and cathode) and the contact points should no where be far apart, which would force the current to run through a longer distance of the electrode with resulting higher internal resistance.

### Lifetime:

It is desirable that the lifetime of an SOEC stack is maximized, i.e. that in SOEC mode the amount of electrolysis product (e.g. H₂ and/or CO) is maximized. Stack lifetime depends on a number of factors, including the choice of the interconnect and spacer, on flow distribution on both process gas sides of the interconnect, evenly distributed protective coating on the materials, on the operating conditions (temperature, current density, voltage, etc), on cell design and materials and many other factors.

### Cost:

The cost of the SOEC stack can be reduced by not using noble materials, by reducing the production time of the stack components, minimizing the number of components and by minimizing the material loss (the amount of material discarded during the production process).

### Dimensions:

The overall dimensions of a cell stack are reduced, when the interconnect design ensures a high utilization of the active cell area. Dead-areas with low process gas flow should be reduced and inactive zones for sealing surfaces should be minimized.

### Production time.

Production time of the stack components should be minimized, and the design of the stack and its components should also contribute to a fast assembling of the stack. In general, *for every component the stack design renders unnecessary, there is a gain in production time.*

### Fail rate.

The stack components production methods and materials should permit a low fail rate (such as unwanted holes in the interconnect gas barrier, uneven material thickness or characteristics). Further the fail-rate of the assembled cell stack can be reduced when the interconnect design *reduces the total number of components to be assembled and reduces the length and number of seal surfaces.*

### Number of components.

Apart from minimizing errors and assembling time as already mentioned, a reduction of the number of components leads to a reduced cost.

The way the anode and cathode gas flows are distributed in a SOEC stack is by having a common manifold for each of the two process gasses, the oxy and fuel gas. The manifolds can either be internal or external. The manifolds supply process gasses to the individual layers in the SOEC stack by the means of channels to each layer. The channels are normally situated in one layer of the repeating elements which are comprised in the SOEC stack, i.e. in the spacers or in the interconnect. Internal gas manifolds are often in the form of apertures in the cell and/or interconnect components which form one or a number of channels and gas in-/out-lets when the cell components are stacked. External manifolds on the other hand are often formed as covers which may cover for instance one or more sides of the SOEC stack and thereby distribute the process gas to the side of the stack and thus the edge of each cell in the stack. Instead of a cover the stack may also simply be arranged in a container where the process gas flows and thus the process gas has access to the sides of the stack from where the process gas may flow into the stack from the open edge zones of each cell.

High temperature electrolysis (SOEC) is an endothermic electrochemical conversion of H2O to H2 or CO2 to CO on the fuel side of the cell. The endothermic electrochemical process is counteracted by the heat generated inside the SOEC stack from ohmic losses (Joule heating), which is proportional with the current through the stack. When the endothermic process is balanced with the ohmic losses, the stack can be operated "thermoneutrally", i.e. the temperature profile from fuel inlet to outlet is ideally constant. But in many operating points, especially at part load, the heat generated by the ohmic losses is less than the heat consumed for the electrochemical process - this creates a thermal profile across the cells, where the temperature drops from inlet to outlet.

The local current density (i) in a given area of the cell is controlled by the Nernst potential, which is affected by the local temperature and gas compositions. The local gas composition is controlled by stack design, e.g. the choice of flow paths, where the goal is to get as even distribution of gas across the cell, between the cells in a stack and between stacks - all while simultaneously minimizing the pressure drop. But even with perfect flow distribution, the fuel concentration will always be higher at fuel inlet (and product concentration low), which favors a higher than average current density. When the stack is run at an operating point (current) below the thermoneutral point, the temperature at fuel inlet is higher than the rest of the cell - further increasing the local current density. Thus, in most operating points, the maximum current density (imax) is located at the fuel inlet area.

Several degradation mechanisms are highly affected by the current density, and even accelerated if the current density is higher than a certain "threshold value". For example, Chen et al. (Journal of The Electrochemical Society, 160 (8) F883-F891 (2013)) demonstrate that additional degradation mechanisms, such as the formation of ZrO2 nanoparticles, can be observed in SOECs operated at high current densities (at 1 A/cm2 or 1.5 A/cm2 in electrolysis mode), while the same degradation mechanisms were not present in tests running at 0.75 A/cm2 or 0.5 A/cm2 in electrolysis mode. In another example (Knibbe et al, Journal of The Electrochemical Society, 157 (8) B1209-B1217 (2010)), increased degradation of ohmic resistance was observed due to oxygen bubble formation and delamination at the oxygen electrode / electrolyte interface, when the electrolysis current was increased from 1 A/cm2 to 1.5 A/cm2 to 2 A/cm2. Mogensen et al have reported that operation at high current densities (high electrode overpotentials) can lead to the loss of Ni from the electrochemically active fuel electrode / electrolyte interface in SOECs based on Ni/YSZ electrodes (Fuel Cells, 17, 2017, No. 4, 434-441). In SOFC mode, Hagen et al. (Journal of The Electrochemical Society, 153 (6) A1165-A1171 (2006)) have demonstrated that the degradation rate increased as a function of cell polarization (current density) at all operating temperatures tested (750°C, 850°C and 950°C). The degradation rate at a fixed current density increased more steeply at 750°C than at 850°C (and 950°C), suggesting that the degradation phenomena is related to electrode overpotential.

Keeping the maximum current density (imax) as low as possible, while maintaining high production rate (iavg) is thus highly desirable to minimize stack degradation and loss of system efficiency. In other words, it is desirable to obtain even current density profile across the stack, and especially a low imax while maintaining a fixed iavg.

As production rate from a stack is linked to the active area (the area where the electrochemical processes occur), it is desirable to maximize the active area. The active area of a stack is naturally linked to the size of the cells, but the active area of the cell is reduced by sealing area and area used for manifolding. It is thus desirable to maximize the active area of the cell, by reducing the area used for sealing and manifolding.

In SOEC mode, the product is the converted gas - and the quality of the converted gas, also called the product gas is critical for downstream applications. It is thus desirable to minimize leaks of undesired components (e.g. air) into the product to obtain a high purity.

US2008305382 discloses a flow-field plate and fuel cell stack using the same. The flow-field plate (19) of the invention comprises a centre hole (5) formed at the centre of flow-field plate, a inlet (6) and a outlet (7) formed on two positions near the outer edge of flow-field plate, and flow grooves distributing around the centre hole (5) and communicating with the inlet (6) and outlet (7) on one side of flow-field plate. Since the flow-field plate according to the invention comprises flow grooves distributing around the centre hole and communicating with the inlet and outlet, which is benefit for oxidant diffusion, there is no "dead-end" on the flow-field plate and reactants may distribute uniformly to each part of flow-field plate. Furthermore, resultants generated from reaction, such as water, nitrogen, carbon dioxide, etc., may be discharged in time and not accumulate on flow-field plate. Therefore, the reactant utilization ratio, the fuel cell performances and its service life may be improved.

US2018269495 describes a method for producing a metallic interconnector for a fuel cell stack, including an air guiding surface with a first gas distributor structure and a fuel gas guiding surface with a second gas distributor structure, the first gas distributor structure and the second gas distributor structure each formed by grooves and webs, includes providing a sheet metal blank, forming the sheet metal blank by a plastic moulding process, the first gas distributor structure and the second gas distributor structure being formed in such a manner that the grooves and webs of the first gas distributor structure are arranged complementary to the grooves and webs of the second gas distributor structure at a predeterminable percentage of area of the air guiding surface and the fuel gas guiding surface of at least 50 percent and at most 99 percent.

US2015180061 describes a gas distribution element for a fuel cell or an electrolyzing device including a first layer and a second layer, the first and second layers are disposed with a gas distribution structure forming a pattern for a fluid flow of a first reactant fluid. The second layer is a homogenizing element, which has first apertures, wherein at least some of the first apertures have a length and a width, with the length being greater than the width and the length extending in a transverse direction to the main direction of fluid flow.

In US2015180052 a fuel cell anode flow field is disclosed, which includes at least one flow channel with a cross-sectional area that varies along at least a portion of its length. In some embodiments, the channel width decreases along at least a portion of the channel length according to a natural exponential function. This type of anode flow field can improve performance, reduce fuel consumption and/or reduce detrimental effects such as carbon corrosion and catalyst degradation, thereby improving fuel cell longevity and durability. When operating the fuel cell on either a substantially pure or a dilute fuel stream, this type of anode flow field can provide more uniform current density. These flow channels can be incorporated into reactant flow field plates, fuel cells and fuel cell stacks. WO2020171238 describes an anode side electrolytic domain, a radial flow is formed from an outer peripheral opening to an inner side opening of an anode side mesh electrode. Flows horizontal to the electrode surface of the anode side mesh electrode are formed. Gases such as ozone generated from water electrolysis in the anode side electrolytic domain are dissolved in raw water in the anode side electrolytic domain, and anode side electrolytic water is generated. Gas such as ozone that has been atomized by the anode side mesh electrode comes into contact with the raw water, and high concentration anode side electrolytic water is generated. The anode side electrolytic water generated in the anode side electrolytic domain flows in the inner side opening of the anode side mesh electrode.

KR100793931 discloses a horizontal radiation type electrolysis apparatus is provided to diffuse water through stable water flow, by designing the structure of the electrolysis apparatus in a disc type so as to diffuse the water horizontally and radially. Two electrode plates are formed on inner faces of a cover and a bottom plate. A water inlet is disposed in a center of the electrode plate of the bottom plate, and a water outlet is disposed in a center of the electrode plate of the cover so that water is inputted directly through the water inlet and diffused outwardly and horizontally in a radiation shape. An acidic water layer and an alkaline water layer are formed in parallel with the two electrode plates during electrolysis. A sorting disc is installed at a position corresponding to the electrode plate of the bottom plate to discharge alkaline water and acidic water through outlet taps respectively. Further, baffles are installed at the two electrode plates. CN111118536 describes an invention which relates to electrolysis chambers suitable for middle and edge air outlet; each electrolysis chamber comprises an outer electrolysis chamber and an inner electrolysis chamber, a mountinghole is formed in the middle of the outer electrolysis chamber, and the inner electrolysis chamber is embedded in the mounting hole of the outer electrolysis chamber; a plurality of liquid inlet holesare formed between the inner electrolysis chamber and the outer electrolysis chamber; a first oxygen outlet hole and a first hydrogen outlet hole are formed in the middle of the inner electrolysis chamber; a plurality of second oxygen outlet holes and second hydrogen outlet holes are formed in the edge of the outer electrolysis chamber and are suitable for outputting oxygen and hydrogen generatedin the outer electrolysis chamber respectively. According to an electrolytic cell, the electrolytic chambers suitable for middle and edge air outlet are adopted, and the multiple electrolytic chambers are mutually overlapped and combined; the flow distance of an electrolyte solution in each electrolysis chamber is shortened, so that the electrolyte solution can efficiently transfer mass in the inner electrolysis chamber and the outer electrolysis chamber, the electrolytic cell is used for preparing gas (oxygen and hydrogen), and the yield of the gas can be increased.

None of the above described known art provides a solution to the above described problems which are solved by the present invention.

Therefore, with reference to the above listed considerations, there is a need for an SOEC stack, where the area of the cell decreases in the flow direction from fuel inlet to fuel outlet to effectively solve the above described problems.

These and other objects are achieved by the invention as described below.

### SUMMARY OF THE INVENTION

The invention is a solid oxide electrolysis cell stack wherein the fuel inlet active cell area is larger than the fuel outlet active cell area.

As described in the background of the invention, it is desirable to obtain an even current density profile and specially to reduce maximum current density (imax) to reduce degradation. An even current density profile across the cell will also level out the production of product gas over the cell evenly and thus use the cell more optimally.

According to an embodiment of the invention, for instance a radial inwards fuel flow maximizes the inlet area fraction of the entire cell area, thereby decreasing the maximum current density (imax) for the same average current density (iavg) or production rate. (It is to be understood that the radial inwards fuel flow and the reduction in area in the flow direction can be achieved with other embodiments of the invention, other cell geometries and/or manifolding e.g. a square cell, frame-design or internal manifolds at fuel inlet as will be discussed in the following). Thus, as fuel is depleted from fuel inlet to fuel outlet, the same fuel flow must cover a smaller and smaller cell area than the conventional design, where the flow always covers the same cell area from inlet to outlet. This feature of the flow design ensures that more fuel is available near the outlet (where fuel is depleted), which increases the local current density near the outlet (which is normally the lowest, imin) - this in return decreases imax for the same average current density.

The fact that more fuel flow is compressed to a smaller area near the fuel outlet could be an issue from a pressure drop point of view, but as the fuel is converted to product, oxygen is removed (and transferred to the oxy side of the stack) which reduces the density of the fuel side flow substantially. This feature ensures a low pressure drop, even though the fuel flow nearing the fuel outlet must pass over a relative small fuel outlet cell area.

The inventive fuel flow design can thus be used to lower maximum current density (and thus degradation) for the same production rate (iavg), but it can also be used to increase production rate (iavg) while maintaining the same maximum current density. This is confirmed by multiphysic COMSOL simulations as can be seen in the examples.

The inwards fuel flow design according to embodiments of the invention as explained more in the following, also solves other problems often connected with conventional flow designs. The centralized outlet manifold hole makes it easier to seal the product from leakages, as there is only one manifold with a relative small sealing area. The location of the product outlet manifold in or near the center of the stack thus ensures a pure product.

If the product outlet manifold is cut in the cell (internal manifold), as in one embodiment of the invention, the loss of cell area associated with cutting the manifold is at the area of the cell with the lowest conversion (current density) - and thus the least productive (cheap) area.

If an external fuel inlet manifold is used, as in one embodiment of the invention, further problems are solved. The external fuel inlet manifold ensures a low pressure drop between the cells in the stack, thus minimizing the fuel maldistribution between cells in a stack. The good fuel distribution between cells in a stack ensures optimal usage of all cells, as maximum conversion for a stack is found in the cell with the lowest fuel flow.

Using an external manifold as fuel inlet will also increase the active area, as no area is lost for internal manifolding. This is especially valuable at the fuel inlet(s), where the local current density, and thus conversion rate, is highest. Using external fuel inlet manifolding also makes it easier to control the temperature around the stack, as it is made up of the fuel inlet gas. Thus, environment and fuel inlet temperature are controlled by the inlet temperature of the fuel alone.

When external fuel inlet manifolding is used, fuel will be present in the environment around the stack. This ensures that any leak of product to the surroundings ends up in the fuel inlet and can thus pass the stack and eventually leave in the product outlet manifold. If the leak is in the other direction, the contaminant in the product will be fuel - which is already present as not all fuel is converted in a single pass. The purification of the product will thus only have to consider removing fuel, as no air can enter the product from the surroundings of the stack. The inventive fuel flow design will in both leak scenarios ensure a product with high purity.

The use of an external fuel inlet manifold in combination with the inwards fuel flow design also makes it possible to build up a system with many stacks in the same fuel inlet chamber without the need of individual fuel inlet manifolding. It is also possible to control the fuel inlet flow to all stacks, by simply controlling the pressure in the common fuel inlet chamber, eliminating the need for expensive mass flow controllers (substituting with one single and cheap pressure sensor).

In and embodiment of the invention, the cell is circular. This, in combination with the (then) radial inwards fuel flow, ensures close to even flow paths for the fuel from inlet to outlet all over the cell. The even flow paths make the flow distribution on the cell easier (channels in the interconnect), and thus eases the design. With circular or approximated circular design (pentagon, hexagon, heptagon, ...), it is thus easier to obtain even flow distribution and thus even loading of cell.

In a solution as commonly known in the art, the fuel flow normally runs from one end of the cell to the other, regardless of the chosen cell geometry and manifolding. This means, that the inlet area is equal or close to equal to the outlet area, and the fuel flow is not compressed/concentrated over a smaller area from inlet to outlet. The feature of the invention with a large inlet area and a high fuel flow over a smaller outlet area is thus not commonly known, and the effect of lowering maximum current density not used.

According to the invention, varying the cell area from fuel inlet to fuel outlet, and maximizing (fuel inlet active area of cell)/(Total active area of cell) with the inwards fuel flow, lowers maximum current density and thus degradation for the same production rate (same iavg). Furthermore, using an external inlet manifold to minimize loss of active area, minimize fuel maldistribution between cells and stack and enables control of the environment temperature by the fuel inlet temperature. (It is to be understood however that the advantages of the present invention will also be present when using internal manifolding for the fuel inlet as long as it is according to the invention.)

The use of an internal fuel (product) outlet manifold, has the benefit of having one simple product manifold, ensuring a product with a high purity and cutting in the "low value" part of the cell.

The geometry of the cell as described with a circular or close to circular geometry, has the added benefits of having simple and even flow paths. The inwards fuel flow design also offers the shortest flow path for a given cell size (fuel flow length is approximately half the cell length). This, brings some robustness advantages regarding loss of contact between the layers in a stack (cell and interconnect). This is because the sealing areas around the center outlet manifold and the periphery of the cell is compressed to a solid block during production of the stack. The loss of contact between interconnect and cell can occur on the area between the sealing areas - the shorter the distance, the lower the risk of loss of contact from thermo-mechanical induced forces (for instance difference in TEC).

Multiphysics simulation of different idealized fuel flow concepts, has shown a decrease of maximum current density with more than 5% in relevant operating point, when comparing radial inwards flow geometry with standard solution (quadratic/rectangular cell geometry and linear fuel flow). The simulations also show, that reversing the radial fuel flow geometry to an "outwards radial flow" has the opposite effect - it increases maximum current density.

The invention according to claim 1 is a solid oxide electrolysis cell stack comprising a plurality of stacked cell units. Each of the cell units comprises a cell layer and each cell layer comprises an active cell area. The active cell area is the part of the cell area which is involved in the electrochemical electrolysis process during operation i.e. not the part which due to sealing or other is not involved in the electrochemical electrolysis process. As it is known and described in the art, it is to be understood that the cell layer comprises an electrolyte, a cathode and an anode layer. Each cell unit also comprises an interconnect layer comprising an interconnect. The interconnect electrically connects the cell layers and provides flow fields on each of the sides of the interconnect for the process gasses, the fuel gas and the oxy gas. One interconnect layer separates one cell layer from the adjacent cell layer in the cell stack. Each interconnect layer has a fuel side with fuel flow channels and at least one fuel inlet and a fuel inlet active cell area. The fuel inlet active cell area is a part of the interconnect fuel side which is adjacent to the fuel inlet. It is to be understood that the interconnect fuel inlet active cell area is a part of the interconnect, but as the layers are assembled to a stack it is facing an active cell area, hence the term. Each interconnect layers fuel side further has at least one fuel outlet and a fuel outlet active cell area. Again, it is to be understood that the fuel outlet active cell area is a part of the interconnect, but as the layers are assembled to a stack, it is facing an active cell area.

The fuel inlet/outlet active cell area is defined as the width of the fuel inlet/outlet multiplied with a depth of 10 mm of the active cell area, as will also be apparent from the following explanation of the embodiments shown in the drawings. Furthermore, as known in the art, each interconnect layer has an oxy side comprising oxy gas flow channels. According to claim 1, said fuel inlet active cell area is at least 50% larger than the fuel outlet active cell area. As described in the above, the reduction in the fuel flow path from the fuel inlet active cell area to the fuel outlet active cell area, has the advantage that the maximum current density and thus degradation is lowered for the same production rate of each solid oxide electrolysis cell and thus the solid oxide electrolysis cell stack.

According to an embodiment of the invention, said at least one fuel inlet is located adjacent to one or more periphery edges of the active cell area, i.e. adjacent to one or more of the outer edges of the flat cell. The at least one fuel outlet on the other hand is located adjacent to the center of the active cell area. Thus, the fuel flow, when passing the cell unit from the fuel inlet(s) to the fuel outlet(s) will have a flow direction from the periphery of the cell unit towards the center of the cell unit. In a further embodiment, the at least one fuel outlet is located in the center of the active cell area. It is to be understood that tolerances have to be included, it may not be the exact center of the active cell area as this depends on the geometrical shape of the cell unit, production tolerances and variations in the design of the cell unit. However, the effect still is that the fuel flow in each cell unit has a flow direction from the periphery of the cell unit towards the center of the cell unit. It is also to be understood that the flow direction from the periphery of the cell unit towards the center of the cell unit is a general flow direction, not an exact flow direction: Due to ribs/contact points, inlet or exit holes, seals etc. the flow direction may divert a bit from this described direction, but in general, overall, the main flow direction will be from the fuel inlet(s) to the fuel outlet(s), and as they are located near the periphery and near the center respectively, the main/general fuel flow direction will be from the periphery to the center.

In an embodiment of the invention, the cell units have a circular shape. The circular shape of the cell units is the ideal shape with reference to the described advantages of the inwards fuel flow direction, since this under perfect conditions enables a radial inwards fuel flow with almost equal flow distance from fuel inlet(s) to fuel outlet(s). This is especially true in an embodiment where the fuel inlet has external manifolding as described in the foregoing and extends along the entire outer edge of the circular shaped cell units and the fuel outlet has internal manifolding and is a circular hole located in the center of the cell units.

However due to production advantages, design advantages, construction of larger systems, to mention a few, it may in some cases be advantageous to have cell unit shapes other than circular, i.e. only more or less close to circular, however with the flow direction mainly from the periphery towards the center of the cell units still kept.

Thus, in a further embodiment of the invention, the cell units have a triangular shape. It is to be understood, that the shape may only be generally triangular, as for instance the corners may be rounded. Likewise, further embodiments of the invention comprise stacks with cell units having a rectangular shape, a pentagonal shape, a hexagonal shape, a heptagonal shape or an octagonal shape. Again, it is to be understood that all the mentioned shapes may be the general shapes with smaller deviations such as for instance the mentioned rounded corners or for instance curved sides. Also, the angles may vary from the exact defined angles of the mentioned shapes, thus covering parallelograms, rhombus etc. It is also to be understood that the invention covers embodiments with multi-gonal shapes, i.e. shapes with a higher number of sides and corners higher than the octagonal shapes. The different geometrical shapes have different advantages: Even though the circular shape may be optimal for the fuel flow, for instance the hexagonal shape may include advantages for the oxy flow (on the other side of the interconnect and not discussed here) while still being close to circular and thus having the described advantages for the fuel flow and performance / lowered degradation of the cell units.

In an embodiment of the invention the active cell area of each cell unit decreases from the at least one fuel inlet to the at least one fuel outlet in the direction of the fuel flow. As described in the previous, this has the advantage of lowering maximum current density and thus degradation for the same production rate of each solid oxide electrolysis cell and thus the solid oxide electrolysis cell stack. In a further embodiment, the decrease of the active cell area of each cell unit from the at least one fuel inlet to the at least one fuel outlet in the direction of the fuel flow is at least 50%. Hence, when the fuel enters each cell unit the area where it may flow is at least double the area where it may flow when it exits each cell unit.

A further embodiment of the invention is a method of performing solid oxide electrolysis in a solid oxide electrolysis cell stack comprising a plurality of stacked cell units. As is also the case in the first embodiment and explained there, each cell unit comprises a cell layer comprising an active cell area, and an interconnect layer comprising an interconnect. One interconnect layer separates one cell layer from the adjacent cell layer in the cell stack. Each interconnect layer has a fuel side with at least one fuel inlet and a fuel inlet active cell area, and at least one fuel outlet and a fuel outlet active cell area. Each interconnect layer also has an oxy side as well known in the art. The fuel inlet active cell area is at least 50% larger than the fuel outlet active cell area, with the advantages as explained in the previous. The method comprises the steps of:
Providing a fuel fluid comprising H₂O or CO₂ or a mixture of H₂O or CO₂ to the at least one fuel inlet and fuel inlet active cell area. The fuel may be provided to the fuel inlet(s) via internal or external manifolding as already discussed, the external manifolding having the advantages as also discussed. A further method step is providing a flow of said fuel fluid from the fuel inlet(s) and fuel inlet active cell area towards the fuel outlet(s) and fuel outlet active cell area. The flow is driven by a pressure difference between fuel inlet(s) and fuel outlet(s) and it flows in flow fields around ridges and contact points formed in the interconnect or on the interconnect or for instance around nets or foils adjacent to the interconnect and adapted to form flow fields, to mention some.

An electrolysis current is applied through the solid oxide electrolysis stack in a further method step, to electrolytically reduce at least a fraction/part of the fuel fluid, transfer oxygen ions across an electrolyte of the solid oxide electrolysis cell, produce molecular oxygen on the oxy side of the solid oxide electrolysis cell, whereby the density of said fuel fluid decreases as it flows from the fuel inlet(s) and fuel inlet active cell area towards the fuel outlet(s) and fuel outlet active cell area. Thus, the decreasing fuel fluid density counteracts the issue with having a large fuel flow on a smaller and smaller area from the fuel inlet(s) towards the fuel outlet(s), which would otherwise "normally" increase the pressure drop. Hence, the design with "radially" (from outer periphery towards center) inwards flow of the fuel in the cell units provides balanced fuel cell units with even pressure drop and load and thus minimized degradation without compromising the performance.

In a further step of the method the now density reduced fuel fluid is exited through the at least one fuel outlet. It is to be understood that the method described may also be performed on a solid oxide electrolysis cell stack according to the further embodiments as described in the foregoing.

### FEATURES OF THE INVENTION

1. Solid oxide electrolysis cell stack comprising a plurality of stacked cell units, each cell unit comprises a cell layer comprising an active cell area, and an interconnect layer comprising an interconnect, one interconnect layer separates one cell layer from the adjacent cell layer in the cell stack, each interconnect layer has a fuel side with at least one fuel inlet and a fuel inlet active cell area, and at least one fuel outlet and a fuel outlet active cell area and an oxy side; wherein the fuel inlet active cell area is at least 50% larger than the fuel outlet active cell area.
2. Solid oxide electrolysis cell stack according to feature 1, wherein the at least one fuel inlet is located adjacent to one or more periphery edges of the active cell area and the at least one fuel outlet is located adjacent to the centre of the active cell area, whereby the fuel flow in each cell unit has a flow direction from the periphery of the cell unit towards the centre of the cell unit.
3. Solid oxide electrolysis cell stack according to any of the preceding features, wherein the at least one fuel inlet is located adjacent to one or more periphery edges of the active cell area and the at least one fuel outlet is located in the centre of the active cell area, whereby the fuel flow in each cell unit has a flow direction from the periphery of the cell unit towards the centre of the cell unit.
4. Solid oxide electrolysis cell stack according to any of the preceding features, wherein the cell units have a circular shape.
5. Solid oxide electrolysis cell stack according to any of the features 1 - 3, wherein the cell units have a triangular shape.
6. Solid oxide electrolysis cell stack according to any of the features 1 - 3, wherein the cell units have a rectangular shape.
7. Solid oxide electrolysis cell stack according to any of the features 1 - 3, wherein the cell units have a pentagonal shape.
8. Solid oxide electrolysis cell stack according to any of the features 1 - 3, wherein the cell units have a hexagonal shape.
9. Solid oxide electrolysis cell stack according to any of the features 1 - 3, wherein the cell units have a heptagonal shape.
10. Solid oxide electrolysis cell stack according to any of the features 1 - 3, wherein the cell units have an octagonal shape.
11. Solid oxide electrolysis cell stack according to any of the features 1 - 3, wherein the cell unit have any higher multi-gonal shape.
12. Solid oxide electrolysis cell stack according to any of the preceding features, wherein the active cell area of each cell unit decreases from the at least one fuel inlet to the at least one fuel outlet in the direction of the fuel flow.
13. Solid oxide electrolysis cell stack according to any of the preceding features, wherein the active cell area of each cell unit decreases at least 50% from the at least one fuel inlet to the at least one fuel outlet in the direction of the fuel flow.
14. Solid oxide electrolysis cell stack according to any of the preceding features comprising external manifolding for the at least one fuel inlet and internal manifolding for the at least one fuel outlet.
15. Method of performing solid oxide electrolysis in a solid oxide electrolysis cell stack comprising a plurality of stacked cell units, each cell unit comprises a cell layer comprising an active cell area, and an interconnect layer comprising an interconnect, one interconnect layer separates one cell layer from the adjacent cell layer in the cell stack, each interconnect layer has a fuel side with at least one fuel inlet and a fuel inlet active cell area, and at least one fuel outlet and a fuel outlet active cell area and an oxy side; wherein the fuel inlet active cell area is at least 50% larger than the fuel outlet active cell area, said method comprising the steps of
   - providing a fuel fluid comprising H₂O or CO₂ or a mixture of H₂O or CO₂ to said at least one fuel inlet and fuel inlet active cell area
   - providing flow of said fuel fluid from said at least one fuel inlet and fuel inlet active cell area towards said at least one fuel outlet and fuel outlet active cell area
   - applying an electrolysis current through the solid oxide electrolysis stack to electrolytically reduce at least a fraction of the fuel fluid, transfer oxygen ions across an electrolyte of the solid oxide electrolysis cell, produce molecular oxygen on the oxy side of said solid oxide electrolysis cell,
   - whereby the density of said fuel fluid decreases as it flows from said at least one fuel inlet and fuel inlet active cell area towards said at least one fuel outlet and fuel outlet active cell area
   - exiting the now density reduced fuel fluid through said at least one fuel outlet.

### BRIEF DESCRIPTION OF THE DRAWINGS

The invention is further illustrated by the accompanying drawings showing examples of embodiments of the invention. It is to be understood that the invention according to the claims covers many other embodiments than the ones shown in the drawings which serve the purpose of explaining the invention with specific examples.
Fig. 1 shows a fuel side view of an interconnect layer of a solid oxide electrolysis cell stack according to an embodiment of the invention.
Fig. 2 shows a fuel side view of an interconnect layer of a solid oxide electrolysis cell stack according to another embodiment of the invention.

### POSITION NUMBERS.

01. Interconnect layer
02. Fuel side of interconnect layer
03. Fuel inlet
04. Fuel inlet active cell area
05. Fuel outlet
06. Fuel outlet active cell area
07. Periphery edge of the active cell area
08. Centre of the active cell area
09. Fuel flow direction

### DETAILED DESCRIPTION

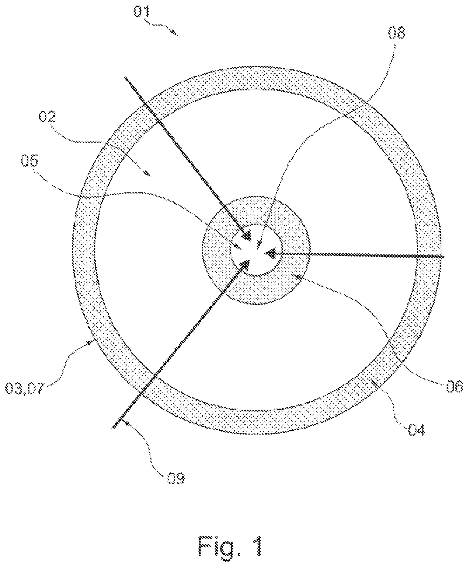

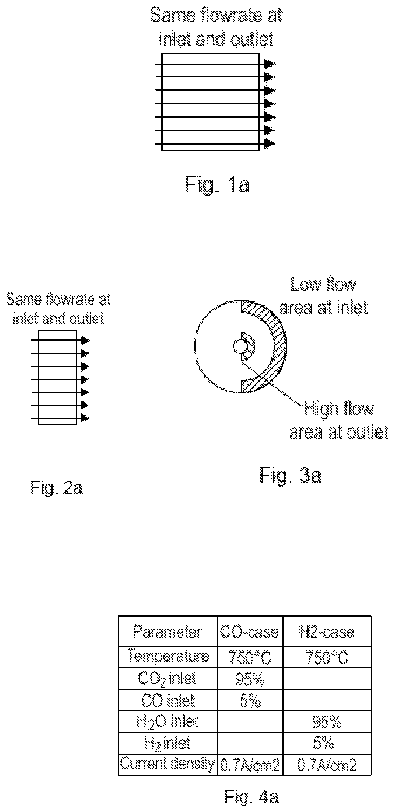

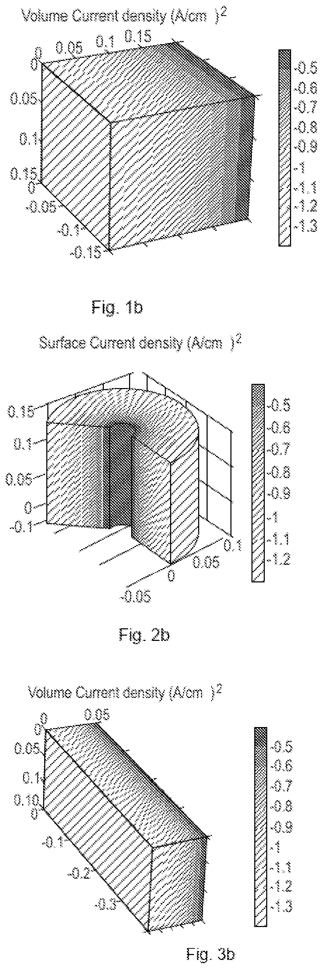

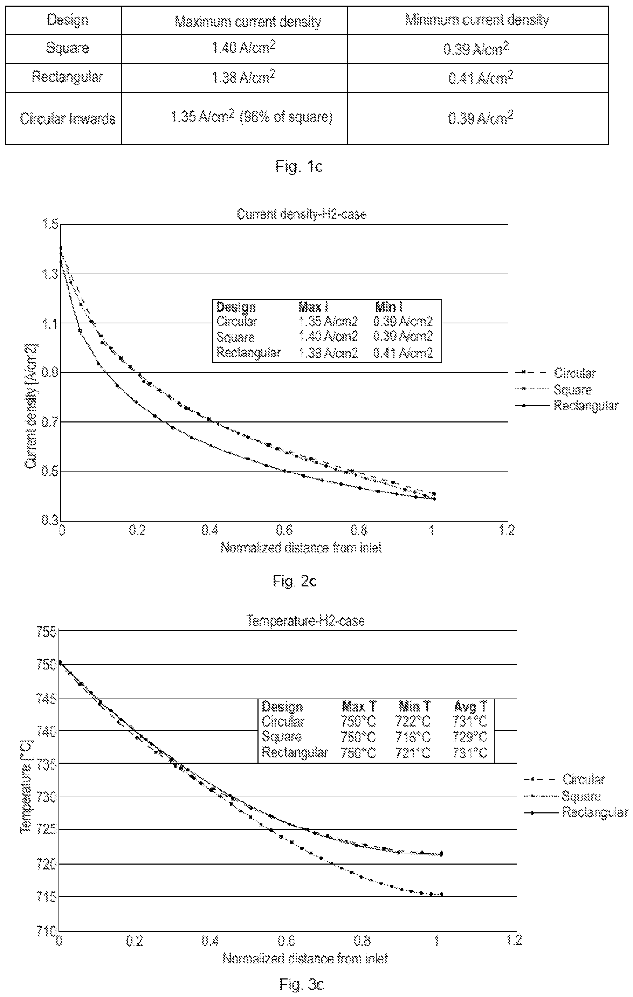

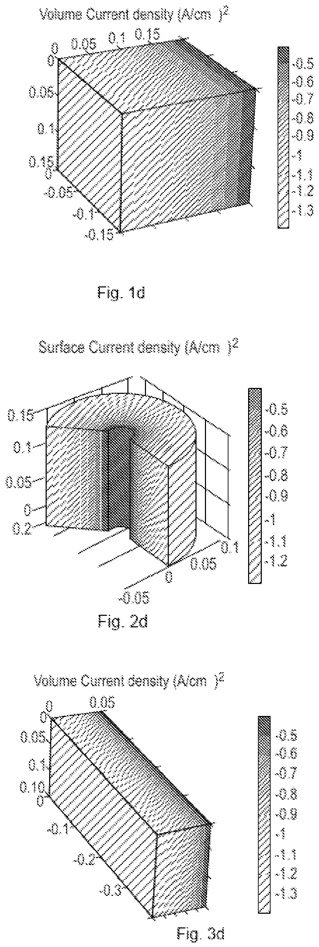

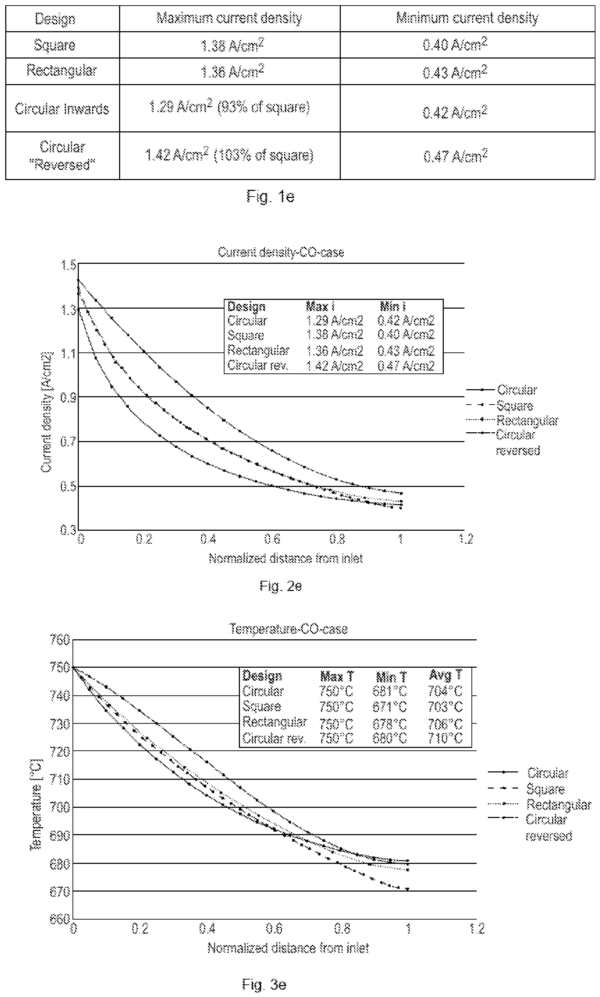

Fig. 1 shows an interconnect layer 01 of a solid oxide electrolysis cell stack according to an embodiment of the invention. As can be seen the interconnect layer of the present embodiment is circular, this is also the case for the cell unit layers (not shown) of the present invention, as the layers are stacked to form a SOEC stack with at least close to the same outer stack dimensions of the different layers (minor differences in outer dimensions of the stack layers may occur). Fig. 1 shows the fuel side of the interconnect layer 02. It is to be understood that the fuel side shown, when stacked, faces and contacts an adjacent cell layer in contact points of the interconnect layer (not shown) as known in the art, which form electrical contact and fuel fluid flow paths between the interconnect layer, the cell layer and the contact points for the fuel to flow in. In this embodiment, the fuel inlet 03 is the whole periphery edge of the circle, the whole periphery edge of the active cell area 07. As also explained in the foregoing, the interconnect layer itself is not a chemical active area, but when the stack is assembled, the interconnect layer faces an active cell area of the adjacent cell unit, and thus the part of the interconnect layer which faces an active cell area is here also named an active cell area, though still a part of the interconnect layer, to describe the different parts of the interconnect layer. Accordingly, from the fuel inlet, a fuel inlet active cell area 04 of the interconnect layer stretches a specific distance radially inwards along the interconnect layer, as discussed earlier defined as 10 mm from the periphery edge and radially inwards as seen on Fig. 1. The fuel then flows further in a radial fuel flow direction 09 towards the fuel outlet 05, which is located in the centre of the active cell area 08 which is also the centre of the interconnect layer. Before exiting through the fuel outlet, the fuel passes the fuel outlet active cell area 06, which stretches in a distance of 10 mm from the fuel outlet edge and to the fuel outlet edge of the interconnect layer. Thus, as can be seen on Fig. 1, the fuel flows from a relatively large fuel inlet active cell area over a continuously smaller active cell area to exit passing a relatively small fuel outlet active cell area, thereby compressing the fuel flow as the fuel density decreases when passing the active cell area as discussed in the foregoing.

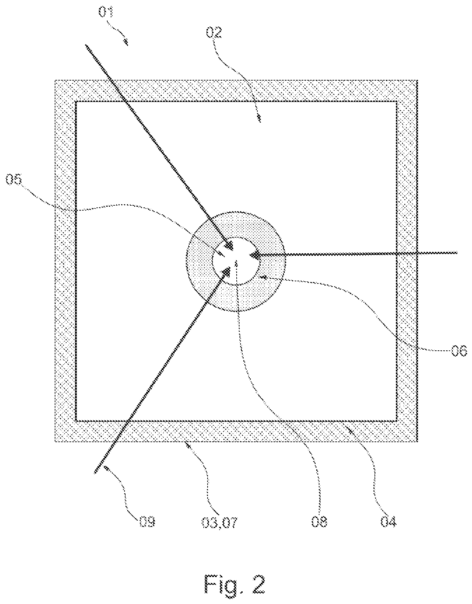

In Fig. 2 a different embodiment of the invention is shown where the interconnect layers (and thus also the cell layers) have a quadratic shape. The fuel inlet is however along the whole periphery edge of the active cell area as in the embodiment shown in Fig. 1, so though the fuel flow direction is not radial it is still from the entire periphery edge of the interconnect layer and inwards towards the centrally located fuel outlet. Therefore, even though all the fuel flow paths in Fig. 2 are not exactly the same length the active cell area the fuel passes also in this embodiment decreases as the fuel flows from the inlet to the outlet and the same effects and advantages as discussed in the above applies.

### Example

The following is an example of the effect of having an inwards fuel flow in an solid oxide electrolysis cell, from the outer edge of the electrolysis cell with an external manifold providing fuel to the entire outer edge zone - towards a centrally located fuel outlet, and where the fuel inlet active cell area is considerably larger than the fuel outlet active cell area, as is the case in the present invention according to the claims. The example covers both comparisons of flow geometries for H2 and CO2. "Normal" fuel flow paths for square and rectangular cell designs, where the area for the fuel to pass is constant along the flow path is compared to a fuel flow path according to the invention, where the area for the fuel to pass is decreasing from the fuel inlet to the fuel outlet. As can be seen in both the H2 case and the CO2 case, the maximum current density and thus the degradation of the cell is lower for the design according to the invention compared to the known art designs.

### Geometry, flow and even loading

### Fuel flow configuration-COMSOL 2D model

Simple 2D COMSOL models of stacks with
- Same active cell area
- Idealized flows
- Same operation point
   1. Square cells
   2. Rectangular cell
   3. Circular cells simulated with
      1. Flow inwards towards center hole
      2. ''Reversed'' = flow from center hole and outwards **(see fig. la, 2a, 3a and 4a)**

### Geometry, flow and even loading

COMSOL simulations-H2 case
- The current density profile for square and rectangular are very similar
- The current density profile is different for the circular design with inwards flow, as the area decreases towards the center (outlet)
- Maximum current density is highest for the square cell
- 1.5% lower for the rectangular design
- 3.5% lower maximum current density for the circular design with inwards flow geometry **(see** **figs. 1b, 2b, 3b** **and** **figs. 1c, 2c, 3c****).**

### Geometry, flow and even loading

COMSOL simulations-CO case
- The current density profiles follow same trend as in the H2 case
- The "reversed" circular design (inlet in center) has the highest current density
- Reversing the flow in the circular design has the opposite effect =higher maximum current density
- The circular design with inwards flow has a 6.5% lower maximum current density compared with the square design **(see** **figs. 1d, 2d, 3d** **and** **1e, 2e, 3e****).**

## Claims

1. Solid oxide electrolysis cell stack comprising a plurality of stacked cell units, each cell unit comprises a cell layer comprising an active cell area, and an interconnect layer comprising an interconnect, one interconnect layer separates one cell layer from the adjacent cell layer in the cell stack, each interconnect layer has a fuel side with at least one fuel inlet and a fuel inlet active cell area, and at least one fuel outlet and a fuel outlet active cell area and an oxy side; wherein the fuel inlet active cell area is at least 50% larger than the fuel outlet active cell area.

2. Solid oxide electrolysis cell stack according to claim 1, wherein the at least one fuel inlet is located adjacent to one or more periphery edges of the active cell area and the at least one fuel outlet is located adjacent to the centre of the active cell area, whereby the fuel flow in each cell unit has a flow direction from the periphery of the cell unit towards the centre of the cell unit.

3. Solid oxide electrolysis cell stack according to any of the preceding claims, wherein the at least one fuel inlet is located adjacent to one or more periphery edges of the active cell area and the at least one fuel outlet is located in the centre of the active cell area, whereby the fuel flow in each cell unit has a flow direction from the periphery of the cell unit towards the centre of the cell unit.

4. Solid oxide electrolysis cell stack according to any of the preceding claims, wherein the cell units have a circular shape.

5. Solid oxide electrolysis cell stack according to any of the claims 1 - 3, wherein the cell units have a triangular shape.

6. Solid oxide electrolysis cell stack according to any of the claims 1 - 3, wherein the cell units have a rectangular shape.

7. Solid oxide electrolysis cell stack according to any of the claims 1 - 3, wherein the cell units have a pentagonal shape.

8. Solid oxide electrolysis cell stack according to any of the claims 1 - 3, wherein the cell units have a hexagonal shape.

9. Solid oxide electrolysis cell stack according to any of the claims 1 - 3, wherein the cell units have a heptagonal shape.

10. Solid oxide electrolysis cell stack according to any of the claims 1 - 3, wherein the cell units have an octagonal shape.

11. Solid oxide electrolysis cell stack according to any of the claims 1 - 3, wherein the cell unit have any higher multi-gonal shape.

12. Solid oxide electrolysis cell stack according to any of the preceding claims, wherein the active cell area of each cell unit decreases from the at least one fuel inlet to the at least one fuel outlet in the direction of the fuel flow.

13. Solid oxide electrolysis cell stack according to any of the preceding claims, wherein the active cell area of each cell unit decreases at least 50% from the at least one fuel inlet to the at least one fuel outlet in the direction of the fuel flow.

14. Solid oxide electrolysis cell stack according to any of the preceding claims comprising external manifolding for the at least one fuel inlet and internal manifolding for the at least one fuel outlet.

15. Method of performing solid oxide electrolysis in a solid oxide electrolysis cell stack comprising a plurality of stacked cell units, each cell unit comprises a cell layer comprising an active cell area, and an interconnect layer comprising an interconnect, one interconnect layer separates one cell layer from the adjacent cell layer in the cell stack, each interconnect layer has a fuel side with at least one fuel inlet and a fuel inlet active cell area, and at least one fuel outlet and a fuel outlet active cell area and an oxy side; wherein the fuel inlet active cell area is at least 50% larger than the fuel outlet active cell area, said method comprising the steps of
• providing a fuel fluid comprising H₂O or CO₂ or a mixture of H₂O or CO₂ to said at least one fuel inlet and fuel inlet active cell area
• providing flow of said fuel fluid from said at least one fuel inlet and fuel inlet active cell area towards said at least one fuel outlet and fuel outlet active cell area
• applying an electrolysis current through the solid oxide electrolysis stack to electrolytically reduce at least a fraction of the fuel fluid, transfer oxygen ions across an electrolyte of the solid oxide electrolysis cell, produce molecular oxygen on the oxy side of said solid oxide electrolysis cell,
• whereby the density of said fuel fluid decreases as it flows from said at least one fuel inlet and fuel inlet active cell area towards said at least one fuel outlet and fuel outlet active cell area
• exiting the density reduced fuel fluid through said at least one fuel outlet.

## Patentansprüche

1. Festoxid-Elektrolysezellstapel, der eine Vielzahl von gestapelten Zelleinheiten umfasst, wobei jede Zelleinheit eine Zellschicht, die einen aktiven Zellbereich umfasst, und eine Verbindungsschicht umfasst, die eine Verbindung umfasst, wobei eine Verbindungsschicht eine Zellschicht von der angrenzenden Zellschicht im Zellstapel trennt, wobei jede Verbindungsschicht eine Brennstoffseite mit mindestens einem Brennstoffeinlass und einem aktiven Zellbereich des Brennstoffeinlasses und mindestens einem Brennstoffauslass und einem aktiven Zellbereich des Brennstoffauslasses, und eine Sauerstoffseite aufweist; wobei der aktive Zellbereich des Brennstoffeinlasses mindestens 50 % größer ist als der aktive Zellbereich des Brennstoffauslasses.

2. Festoxid-Elektrolysezellstapel nach Anspruch 1, wobei der mindestens eine Brennstoffeinlass an eine oder mehrere Umfangskanten des aktiven Zellbereichs angrenzend liegt und der mindestens eine Brennstoffauslass an die Mitte des aktiven Zellbereichs angrenzend liegt, wodurch der Brennstofffluss in jeder Zelleinheit eine Flussrichtung vom Umfang der Zelleinheit zur Mitte der Zelleinheit hin aufweist.

3. Festoxid-Elektrolysezellstapel nach einem der vorstehenden Ansprüche, wobei der mindestens eine Brennstoffeinlass an eine oder mehrere Umfangskanten des aktiven Zellbereichs angrenzend liegt und der mindestens eine Brennstoffauslass in der Mitte des aktiven Zellbereichs liegt, wodurch der Brennstofffluss in jeder Zelleinheit eine Flussrichtung vom Umfang der Zelleinheit zur Mitte der Zelleinheit hin aufweist.

4. Festoxid-Elektrolysezellstapel nach einem der vorstehenden Ansprüche, wobei die Zelleinheiten eine Kreisform aufweisen.

5. Festoxid-Elektrolysezellstapel nach einem der Ansprüche 1-3, wobei die Zelleinheiten eine Dreieckform aufweisen.

6. Festoxid-Elektrolysezellstapel nach einem der Ansprüche 1-3, wobei die Zelleinheiten eine Rechteckform aufweisen.

7. Festoxid-Elektrolysezellstapel nach einem der Ansprüche 1-3, wobei die Zelleinheiten eine Fünfeckform aufweisen.

8. Festoxid-Elektrolysezellstapel nach einem der Ansprüche 1-3, wobei die Zelleinheiten eine Sechseckform aufweisen.

9. Festoxid-Elektrolysezellstapel nach einem der Ansprüche 1-3, wobei die Zelleinheiten eine Siebeneckform aufweisen.

10. Festoxid-Elektrolysezellstapel nach einem der Ansprüche 1-3, wobei die Zelleinheiten eine Achteckform aufweisen.

11. Festoxid-Elektrolysezellstapel nach einem der Ansprüche 1-3, wobei die Zelleinheit eine höherzahlige Mehreckform aufweist.

12. Festoxid-Elektrolysezellstapel nach einem der vorstehenden Ansprüche, wobei der aktive Zellbereich jeder Zelleinheit von dem mindestens einen Brennstoffeinlass zu dem mindestens einen Brennstoffauslass in Richtung des Brennstoffflusses abnimmt.

13. Festoxid-Elektrolysezellstapel nach einem der vorstehenden Ansprüche, wobei der aktive Zellbereich jeder Zelleinheit von dem mindestens einen Brennstoffeinlass zu dem mindestens einen Brennstoffauslass in Richtung des Brennstoffflusses um mindestens 50 % abnimmt.

14. Festoxid-Elektrolysezellstapel nach einem der vorstehenden Ansprüche, der eine externe Sammelleitung für den mindestens einen Brennstoffeinlass und eine interne Sammelleitung für den mindestens einen Brennstoffauslass umfasst.

15. Verfahren zum Durchführen von Festoxid-Elektrolyse in einem Festoxid-Elektrolysezellstapel, der eine Vielzahl von gestapelten Zelleinheiten umfasst, wobei jede Zelleinheit eine Zellschicht, die einen aktiven Zellbereich umfasst, und eine Verbindungsschicht umfasst, die eine Verbindung umfasst, wobei eine Verbindungsschicht eine Zellschicht von der angrenzenden Zellschicht im Zellstapel trennt, wobei jede Verbindungsschicht eine Brennstoffseite mit mindestens einem Brennstoffeinlass und einem aktiven Zellbereich des Brennstoffeinlasses und mindestens einem Brennstoffauslass und einem aktiven Zellbereich des Brennstoffauslasses, und eine Sauerstoffseite aufweist; wobei der aktive Zellbereich des Brennstoffeinlasses mindestens 50 % größer ist als der aktive Zellbereich des Brennstoffauslasses, wobei das Verfahren die Schritte umfasst zum
- Bereitstellen eines Brennstofffluids, das H₂O oder CO₂ oder ein Gemisch aus H₂O oder CO₂ für den mindestens einen Brennstoffeinlass und aktiven Zellbereich des Brennstoffeinlasses umfasst,
- Bereitstellen eines Flusses des Brennstofffluids von dem mindestens einen Brennstoffeinlass und dem aktiven Zellbereich des Brennstoffeinlasses zu dem mindestens einen Brennstoffauslass und dem aktiven Zellbereich des Brennstoffauslasses,
- Anlegen eines Elektrolysestroms durch den Festoxid-Elektrolysestapel hindurch, um elektrolytisch mindestens eine Fraktion des Brennstofffluids zu reduzieren, Sauerstoffionen über einen Elektrolyten der Festoxid-Elektrolysezelle zu übertragen, molekularen Sauerstoff auf der Sauerstoffseite der Festoxid-Elektrolysezelle zu erzeugen,
- wobei die Dichte des Brennstofffluids, wenn es von dem mindestens einen Brennstoffeinlass und dem aktiven Zellbereich des Brennstoffeinlasses zu dem mindestens einen Brennstoffauslass und den aktiven Zellbereich des Brennstoffauslasses fließt, abnimmt,
- Austreten des Brennstofffluids mit reduzierter Dichte durch den mindestens einen Brennstoffauslass hindurch.

## Revendications

1. Pile de cellules d'électrolyse à oxyde solide comprenant une pluralité d'unités de cellules empilées, chaque unité de cellule comprend une couche de cellule comprenant une zone de cellule active, et une couche d'interconnexion comprenant une interconnexion, une couche d'interconnexion sépare une couche de cellule de la couche de cellule adjacente dans la pile de cellules, chaque couche d'interconnexion présente un côté combustible avec au moins une entrée de combustible et une zone de cellule active d'entrée de combustible, et au moins une sortie de combustible et une zone de cellule active de sortie de combustible et un côté oxy ; dans laquelle la zone de cellule active d'entrée de combustible est au moins 50 % plus grande que la zone de cellule active de sortie de combustible.

2. Pile de cellules d'électrolyse à oxyde solide selon la revendication 1, dans laquelle la au moins une entrée de combustible est située de manière adjacente à un ou plusieurs bords périphériques de la zone de cellule active et la au moins une sortie de combustible est située de manière adjacente au centre de la zone de cellule active, selon laquelle le flux de combustible dans chaque unité de cellule présente une direction d'écoulement de la périphérie de l'unité de cellule vers le centre de l'unité de cellule.

3. Pile de cellules d'électrolyse à oxyde solide selon l'une quelconque des revendications précédentes, dans laquelle la au moins une entrée de combustible est située de manière adjacente à un ou plusieurs bords périphériques de la zone de cellule active et la au moins une sortie de combustible est située au centre de la zone de cellule active, selon laquelle le flux de combustible dans chaque unité de cellule présente une direction d'écoulement de la périphérie de l'unité de cellule vers le centre de l'unité de cellule.

4. Pile de cellules d'électrolyse à oxyde solide selon l'une quelconque des revendications précédentes, dans laquelle les unités de cellules présentent une forme circulaire.

5. Pile de cellules d'électrolyse à oxyde solide selon l'une quelconque des revendications 1-3, dans laquelle les unités de cellules présentent une forme triangulaire.

6. Pile de cellules d'électrolyse à oxyde solide selon l'une quelconque des revendications 1-3, dans laquelle les unités de cellules présentent une forme rectangulaire.

7. Pile de cellules d'électrolyse à oxyde solide selon l'une quelconque des revendications 1-3, dans laquelle les unités de cellules présentent une forme pentagonale.

8. Pile de cellules d'électrolyse à oxyde solide selon l'une quelconque des revendications 1-3, dans laquelle les unités de cellules présentent une forme hexagonale.

9. Pile de cellules d'électrolyse à oxyde solide selon l'une quelconque des revendications 1-3, dans laquelle les unités de cellules présentent une forme heptagonale.

10. Pile de cellules d'électrolyse à oxyde solide selon l'une quelconque des revendications 1-3, dans laquelle les unités de cellules présentent une forme octogonale.

11. Pile de cellules d'électrolyse à oxyde solide selon l'une quelconque des revendications 1-3, dans laquelle les unités de cellule présentent une forme multigonale supérieure.

12. Pile de cellules d'électrolyse à oxyde solide selon l'une quelconque des revendications précédentes, dans laquelle la zone de cellule active de chaque unité de cellule diminue de la au moins une entrée de combustible à la au moins une sortie de combustible dans la direction du flux de combustible.

13. Pile de cellules d'électrolyse à oxyde solide selon l'une quelconque des revendications précédentes, dans laquelle la zone de cellule active de chaque unité de cellule diminue d'au moins 50 % de la au moins une entrée de combustible à la au moins une sortie de combustible dans la direction du flux de combustible.

14. Pile de cellules d'électrolyse à oxyde solide selon l'une quelconque des revendications précédentes, comprenant un collecteur externe pour la au moins une entrée de combustible et un collecteur interne pour la au moins une sortie de combustible.

15. Procédé de réalisation d'une électrolyse à oxyde solide dans une pile de cellules d'électrolyse à oxyde solide comprenant une pluralité d'unités de cellules empilées, chaque unité de cellule comprend une couche de cellule comprenant une zone de cellule active, et une couche d'interconnexion comprenant une interconnexion, une couche d'interconnexion sépare une couche de cellule de la couche de cellule adjacente dans la pile de cellules, chaque couche d'interconnexion présente un côté combustible avec au moins une entrée de combustible et une zone de cellule active d'entrée de combustible, et au moins une sortie de combustible et une zone de cellule active de sortie de combustible et un côté oxy ; dans lequel la zone de cellule active d'entrée de combustible est au moins 50 % plus grande que la zone de cellule active de sortie de combustible, ledit procédé comprenant les étapes de
• fourniture d'un fluide combustible comprenant H₂O ou CO₂ ou un mélange de H₂O ou CO₂ à ladite au moins une entrée de combustible et à la zone de cellule active d'entrée de combustible
• fourniture d'un flux dudit fluide combustible de ladite au moins une entrée de combustible et ladite zone de cellule active d'entrée de combustible vers ladite au moins une sortie de combustible et ladite zone de cellule active de sortie de combustible
• application d'un courant d'électrolyse à travers la pile d'électrolyse à oxyde solide pour réduire électrolytiquement au moins une fraction du fluide combustible, transférer des ions oxygène à travers un électrolyte de la cellule d'électrolyse à oxyde solide, produire de l'oxygène moléculaire sur le côté oxy de ladite cellule d'électrolyse à oxyde solide,
• selon lequel la densité dudit fluide combustible diminue à mesure qu'il s'écoule de ladite au moins une entrée de combustible et ladite zone de cellule active d'entrée de combustible vers ladite au moins une sortie de combustible et ladite zone de cellule active de sortie de combustible
• sortie du fluide combustible à densité réduite par ladite au moins une sortie de combustible.
